# EUROPEAN PATENT APPLICATION

(11) **EP 4 675 068 A1**
(43) Date of publication of application: **07.01.2026**
(21) Application number: 24763076.7
(22) Date of filing: 26.02.2024
(51) Int. Cl.: E05B 47/02, E05B 15/10, E05B 47/00

(54) **MINIATURE ELECTRIC SELF-UNLOCKING LOCKING APPARATUS**

(30) Priority: 28.02.2023 CN 202310174368
(71) Applicant: Nanjing Kangni Mechanical & Electrical Co., Ltd., Nanjing, Jiangsu 210038 (CN)
(72) Inventor: LIU, Luoming, Nanjing, Jiangsu 210038 (CN); ZHANG, Xuliang, Nanjing, Jiangsu 210038 (CN); GUO, Lina, Nanjing, Jiangsu 210038 (CN)
(74) Representative: Murgitroyd & Company
(86) International application number: PCT/CN2024/078501
(87) International publication number: WO 2024/179394

(57) **Abstract**

Disclosed is a miniature electric self-unlockable locking device. The locking device further includes a middle unlocking mechanism, a swing rod rotating mechanism, and an unlocking plate apart from an electric lock, where the middle unlocking mechanism includes a rotary connecting rod and a lifting connecting member, the rotary connecting rod is rotatably connected to the lifting connecting member, a rotary torsion spring for resetting is arranged between the rotary connecting rod and the lifting connecting member, and the lifting connecting member is vertically and slidably connected to a mounting plate; the swing rod rotating mechanism includes a swing rod rotatably mounted on the mounting plate; the unlocking plate is rotatably mounted below a pull rod; and during unlocking, the rotary connecting rod is compressed, one end of the rotary connecting rod is in abutting connection with a backing plate, the other end of the rotary connecting rod is in abutting connection with an end portion of the unlocking plate, and the other end of the unlocking plate is connected to a positioning block. Through a single-motor structure, unlocking may be achieved while an electric motor is reset; and in the case of power outage or a state of motor damage, the middle unlocking mechanism is disengaged from a main lock without manual maintenance, such that it is ensured that a door lock may be locked, and safety and reliability of a door system are enhanced.

## Description

### TECHNICAL FIELD

The present invention relates to a locking apparatus for a door system of a rail vehicle, and in particular to a miniature electric self-unlockable locking device.

### BACKGROUND

The Patent Application No. 202210196524.7 discloses an electric locking device, and the electric locking device includes a latch mounted on a door leaf, and an electric lock component mounted on a side-mounted integration device of a door system. The electric lock component includes an electric motor, a seat body, a lock fork, a lock-in-place switch, and a pull rod, where a shift gear and a shift gear torsion spring are arranged on a gear mounted on the seat body; when the shift gear rotates toward a locking direction, one end of the shift gear restricts movement of the pull rod, and the other end of the shift gear controls rotation of the lock fork; a lock fork torsion spring is mounted on the lock fork, and a side edge of the lock fork is provided with a notch; and a cam, an unlocking plate, and a positioning block coaxially mounted are arranged beside the lock fork, a positioning block torsion spring is arranged on the positioning block, and in a rotation process of the lock fork, the positioning block enters the notch of the lock fork under an action of the positioning block torsion spring. The device is purely electrically controlled without additional air supply, and achieves the functions of electric locking, mechanical first-stage and second-stage locking, unlocking, resetting, and emergency unlocking. However, the device needs another unlocking motor for unlocking when the locking motor is pressed and reset, and a dual-motor structure is complex, thereby increasing the risk of motor damage, and reducing safety of the door system. Moreover, the device of the prior art is manually maintained in the case of power outage or a special state such as motor damage, to ensure safe door closing. With the dual-motor structure, the device of the prior art has a large volume, and is thus unsuitable for more models.

### SUMMARY

Invention objective: an objective of the present invention is to provide a miniature electric self-unlockable locking device locked and unlocked by a single motor.

Technical solution: the present invention provides a miniature electric self-unlockable locking device. The locking device includes an electric lock and a door leaf shaft, where the electric lock includes a mounting plate and an electric motor, a pinion, a large gear, a backing plate, a shift gear, a shift fork, a lock fork, a positioning block, and a pull rod that are mounted on the mounting plate, one end of the shift gear abuts against the pull rod when the shift gear and the backing plate rotate synchronously, the other end of the shift gear shifts the lock fork to move the door leaf shaft, the shift fork pushes the positioning block to rotate when rotating, and the positioning block locks the lock fork; the miniature electric self-unlockable locking device further includes a middle unlocking mechanism, a swing rod rotating mechanism, and an unlocking plate; the middle unlocking mechanism includes a rotary connecting rod and a lifting connecting member, the rotary connecting rod is rotatably connected to the lifting connecting member, a rotary torsion spring for resetting is arranged between the rotary connecting rod and the lifting connecting member, and the lifting connecting member is vertically and slidably connected to the mounting plate; the swing rod rotating mechanism includes a swing rod rotatably mounted on the mounting plate; the unlocking plate is rotatably mounted below the pull rod; during unlocking, the rotary connecting rod is compressed, one end of the rotary connecting rod is in abutting connection with the backing plate, the other end of the rotary connecting rod is in abutting connection with an end portion of the unlocking plate, and the other end of the unlocking plate is connected to the positioning block; the rotary connecting rod pushes one end of the unlocking plate to rotate, and the other end of the unlocking plate pushes the positioning block to rotate for unlocking; and in a process of locking a door leaf, the swing rod is impacted by the door leaf to rotate to a position below the lifting connecting member, and the rotary connecting rod extends out and is disengaged from the unlocking plate and the backing plate sequentially.

Further, the middle unlocking mechanism further includes a deep groove ball bearing and a plastic bushing, the rotary connecting rod is rotatably connected to the lifting connecting member through the deep groove ball bearing, and the lifting connecting member is vertically and slidably connected to the mounting plate through the plastic bushing.

Further, a compression spring is further mounted between the lifting connecting member and the mounting plate.

Further, the swing rod rotating mechanism further includes a polyurethane molded bearing, a connecting rod, a guide post and a limiting post that are mounted at an end portion of the swing rod, the swing rod is located below the connecting rod, the swing rod and the connecting rod rotate coaxially, the connecting rod is rotatably connected to the mounting plate, the polyurethane molded bearing is mounted at one end of the swing rod, the other end of the swing rod is provided with a reset torsion spring fixedly connected to the mounting plate, and the connecting rod rotates on the mounting plate through the limiting post and a limiting groove.

Further, a spring pressing cover is mounted on the reset torsion spring, and the spring pressing cover is fixedly connected to the connecting rod.

Further, a shift rod for shifting the lifting connecting member to lift is fixed at an end portion of the connecting rod.

Further, a steel wire rope casting head and a rotary cam rotating synchronously with the shift fork are arranged on the shift fork, and a microswitch abutting against the rotary cam is further arranged on the mounting plate.

Further, one end of the shift gear abutting against the pull rod is provided with a needle roller bearing, and one end of the lock fork abutting against the shift gear is provided with a roller.

Further, a cam rotating coaxially is arranged above the positioning block, a limit switch is arranged on the mounting plate, and the cam controls opening and closing of the limit switch. Working principle: the principle of disengagement and connection between the middle unlocking mechanism and a main lock is as follows: when the backing plate drives the rotary connecting rod to rotate clockwise in a process that the electric motor drives the device to be locked, the rotary torsion spring deforms, the lock fork drives a vehicle door to be closed, the vehicle door impacts the swing rod, the swing rod rotates to drive the connecting rod and the shift rod to rotate, and the shift rod rotates below the lifting connecting member and presses the lifting connecting member to make the lifting connecting member and the rotary connecting rod ascend. In this case, when the rotary connecting rod is disengaged from the backing plate and the unlocking plate, the middle unlocking mechanism is disengaged from the main lock, and the rotary connecting rod is reset clockwise under an action of the rotary torsion spring; and when the electric motor continues to drive the vehicle door to be closed to a locking state, the shift rod crosses a position of the lifting connecting member, the rotary connecting rod and the lifting connecting member descend to retract under an action of the reset spring, and the rotary connecting rod is in abutting connection with the backing plate and the unlocking plate anew; and
principle of electric unlocking: when the electric motor is reset, the pinion is driven to rotate counterclockwise, the large gear and the backing plate rotate clockwise to drive the rotary connecting rod to rotate counterclockwise, the rotary connecting rod abuts against one end of the unlocking plate and drives the unlocking plate to rotate clockwise, and the other end of the unlocking plate abuts against the positioning block, such that the unlocking plate rotates counterclockwise away from the fork lock to release a locking state; and the fork lock drives the door shaft to be reset under an action of the torsion spring to achieve unlocking.

Beneficial effects: compared with the prior art, the present invention has the following significant advantages: 1. through a single-motor structure, locking may be achieved while the door leaf is pressed, and unlocking may be achieved while the electric motor is reset; 2. in the case of power outage or a state of motor damage, the middle unlocking mechanism is disengaged from a main lock without manual maintenance, such that it is ensured that a door lock may be locked, and safety and reliability of a door system are enhanced; 3. both manual unlocking and electric unlocking may be achieved in the case that a vehicle door is closed, and a signal is fed back to a door controller in time through the microswitch and the limit switch, such that the safety and the reliability of the door system are enhanced; and 4. the locking device is more compact and suitable for a wide range of models, and moreover, structural rigidity is improved through riveting and a double-layer structure, and rigidity and air tightness requirements of an electric lock are satisfied.

### BRIEF DESCRIPTION OF THE DRAWINGS

FIG. 1 is a schematic diagram of an overall structure according to the present invention;
FIG. 2 is a schematic diagram of an initial position of an electric lock according to the present invention;
FIG. 3 is a schematic diagram of a primary locking position of an electric lock according to the present invention;
FIG. 4 is a schematic diagram of a secondary locking position of an electric lock according to the present invention;
FIG. 5 is a schematic diagram of a locking position of an electric lock according to the present invention;
FIG. 6 is a schematic diagram of a middle unlocking mechanism according to the present invention;
FIG. 7 is a schematic diagram of a swing rod rotating mechanism according to the present invention;
FIG. 8 is a schematic diagram of retraction of a rotary connecting rod of a middle unlocking mechanism according to the present invention;
FIG. 9 is a schematic diagram of extension of a rotary connecting rod of a middle unlocking mechanism according to the present invention;
FIG. 10 is a schematic diagram of disengagement between a middle unlocking mechanism and a main lock according to the present invention;
FIG. 11 is a schematic diagram of an initial position (open state) of a swing rod according to the present invention;
FIG. 12 is a schematic diagram of a middle position (a disengaged state of a middle unlocking mechanism) of a swing rod according to the present invention;
FIG. 13 is a schematic diagram of a final position (closed state) of a swing rod according to the present invention;
FIG. 14 is a schematic diagram of a reset state of an electric lock according to the present invention;
FIG. 15 is a schematic diagram of a locking state of an electric lock according to the present invention;
FIG. 16 is a schematic diagram of manual emergency unlocking according to the present invention;
FIG. 17 is a schematic structural diagram of an electric unlocking position according to the present invention; and
FIG. 18 is a schematic structural diagram of unlocking resetting of an electric motor according to the present invention.

### DETAILED DESCRIPTION OF EMBODIMENTS

The technical solution of the present invention will be further described below in combination with the accompanying drawings.

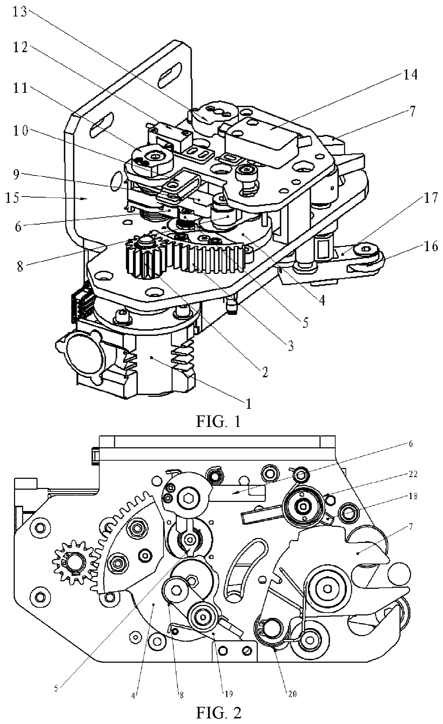

With reference to FIGS. 1-18, an electric lock is mounted in a door system by using screws through holes on a mounting plate 15. A shaft in the mounting plate 15 is riveted to ensure rigidity of the mounting plate. A middle unlocking mechanism and a swing rod rotating mechanism are mounted on the mounting plate 15, a lock fork 7, a rotary cam 11 and a positioning block 18 are further rotatably mounted on the mounting plate 15, a notch I and a notch II are formed on an edge of the lock fork 7 coming into contact with the positioning block 18, and a transmission plate for pushing the positioning block 18 to rotate is mounted on the other side surface of the positioning block 18. An electric motor 1 is mounted below the mounting plate 15, a pinion 2 and a large gear 3 meshing with each other are mounted above the mounting plate 15, the pinion 2 is fixedly connected to an output shaft of the electric motor 1, the large gear 3 is connected to a backing plate 4 through a screw, a shift gear 19 is fixedly connected to the backing plate 4, a needle roller bearing 8 is mounted at one end of the shift gear 19, and the other end of the shift gear shifts a roller 20 of the lock fork 7 to rotate. A shift fork 10, a pull rod 9 and a V-shaped unlocking plate 6 are rotatably mounted below the rotary cam 11 sequentially. The rotary cam 11 and the shift fork 10 rotate synchronously, the other end of the pull rod 9 is in abutting connection with the needle roller bearing 8, and the shift fork 10 and the unlocking plate 6 may abut against a cam 13 and make the cam rotate when rotating. A steel wire rope casting head 35 is fixedly mounted on the shift fork 10, and the rotary cam 11 drives the shift fork 10 to rotate clockwise and abuts against a transmission plate of the positioning block 18 when the steel wire rope casting head 35 is rotated clockwise, such that the positioning block 18 rotates counterclockwise away from the lock fork 7. A microswitch 12 is further mounted on the mounting plate 15, and the rotary cam 11 comes into contact with the microswitch 12 when rotating clockwise. The cam 13 is located above the positioning block 18 and arranged coaxial with the positioning block, a protruding portion of the cam 13 presses against a limit switch 14, a torsion spring 22 is arranged below the cam, and the cam 13 releases the limit switch 14 to obtain a "locking" signal when the positioning block 18 rotates clockwise.

The middle unlocking mechanism includes a rotary connecting rod 5, a rotary torsion spring 27, a deep groove ball bearing 26, a lifting connecting member 23, a plastic bushing 25 and a compression spring 24. The swing rod rotating mechanism includes a polyurethane molded bearing 16, an adjusting pressing cover 28, a spring pressing cover 29, a reset torsion spring 30, a shift rod 31, a guide post 32, a connecting rod 33 and a limiting post 34 that are mounted at an end portion of a swing rod 17.

When the rotary connecting rod 5 is in a compressed state, one end of the rotary connecting rod is in abutting connection with the unlocking plate 6, and the other end of the rotary connecting rod is in abutting connection with the backing plate 4. In this case, one end of the unlocking plate 6 abuts against the rotary connecting rod 5, and the other end of the unlocking plate is close to the transmission plate of the positioning block 18. The backing plate 4 rotates clockwise to drive the rotary connecting rod 5 to rotate counterclockwise, the rotary connecting rod 5 rotates to drive the unlocking plate 6 to rotate clockwise, the rotary connecting rod 5 is rotatably connected to the lifting connecting member 23 through the deep groove ball bearing 26, the lifting connecting member 23 is vertically and slidably connected to the mounting plate 15 through the plastic bushing 25, the compression spring 24 is further mounted between the lifting connecting member 23 and the mounting plate 15, and the rotary torsion spring 27 is fixedly mounted between the rotary connecting rod 5 and the lifting connecting member 23. The swing rod 17 penetrates the connecting rod 33 through the guide post 32 and is rotatably connected to the mounting plate 15, the spring pressing cover 29 is mounted above one end of the swing rod 17, the polyurethane molded bearing 16 is mounted at the other end of the swing rod, the reset torsion spring 30 is arranged on the spring pressing cover 29, and the spring pressing cover 29 is fixedly connected to the connecting rod 33. The connecting rod 33 rotates on the mounting plate 15 through the limiting post 34 and a limiting groove, and the shift rod 31 for shifting the lifting connecting member 23 to lift is fixed to an end portion of the connecting rod 33.

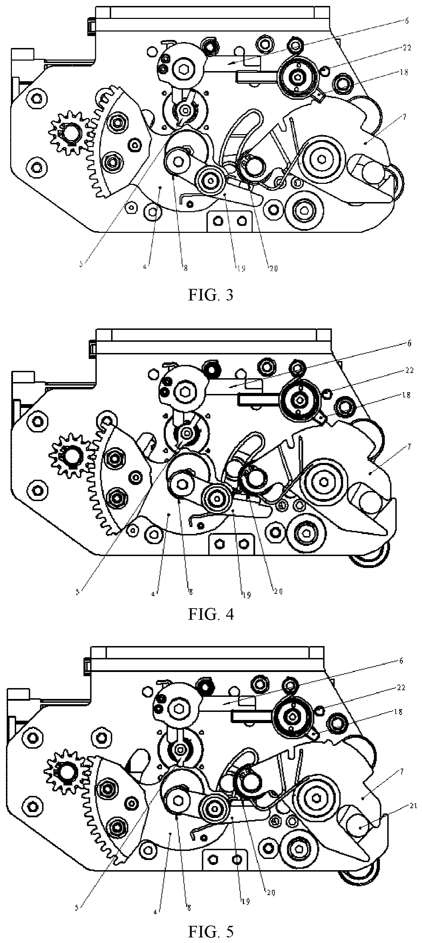

A locking process of the electric motor is as follows: with reference to FIGS. 2-5, the electric motor 1 drives the pinion to rotate clockwise, the pinion 2 drives the large gear 3 to rotate counterclockwise, the backing plate 4 rotates to drive the shift gear 19 to rotate together, the needle roller bearing 8 at one end of the shift gear 19 is in lap joint on the pull rod 9, and one end of the shift gear shifts the roller 20 to rotate, so as to rotate a door leaf shaft 21 to a position of locking a door by the lock fork 7, and achieve the purpose of locking. In a rotation process of the lock fork 7, the positioning block 18 always comes into contact with a notch of the lock fork 7 under an action of the torsion spring 22, and the positioning block 18 crosses the notch I of a primary locking position (with reference to FIG. 3) and the notch II of a secondary locking position (with reference to FIG. 4), and finally stays at a locking position (with reference to FIG. 5). At the primary locking position (with reference to FIG. 3), the positioning block 18 is located in the notch I of the lock fork 7 under an action of the torsion spring 22. At the secondary locking position (with reference to FIG. 4), the positioning block 18 is located in the notch II of the lock fork 7. The positioning block 18 is reset by the torsion spring 22 and comes into contacts with the cam of the lock fork 7 to prevent the cam of the lock fork 7 from reversing, thereby achieving the purpose of locking. The positioning block 18 drives the cam 13 mounted on the same shaft as the positioning block 18 to rotate when rotating, and the cam 13 releases the limit switch 14 to obtain a "locking" signal.

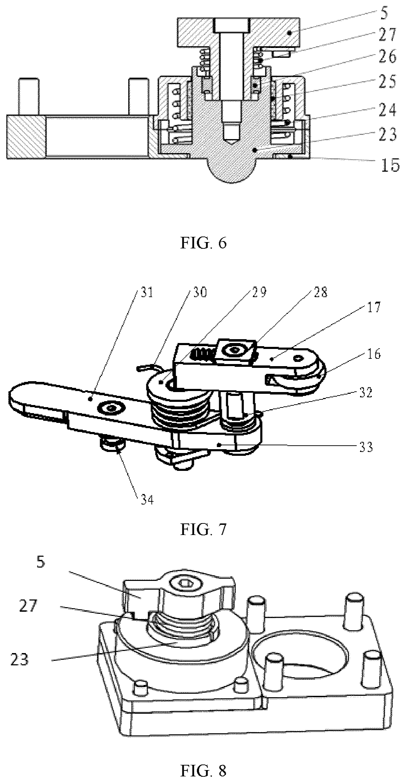

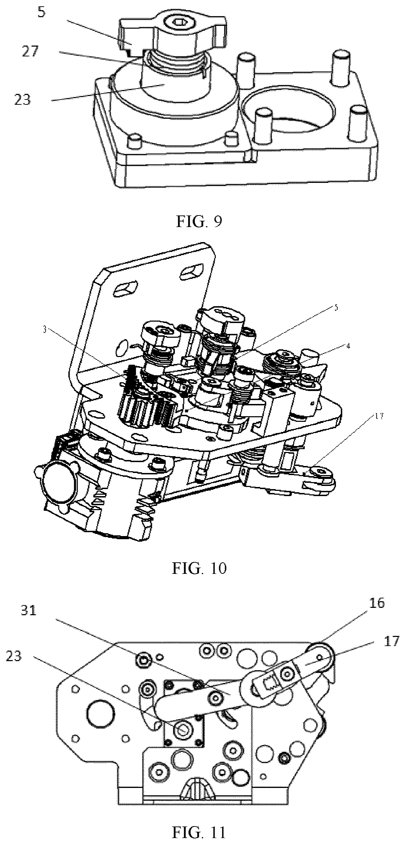

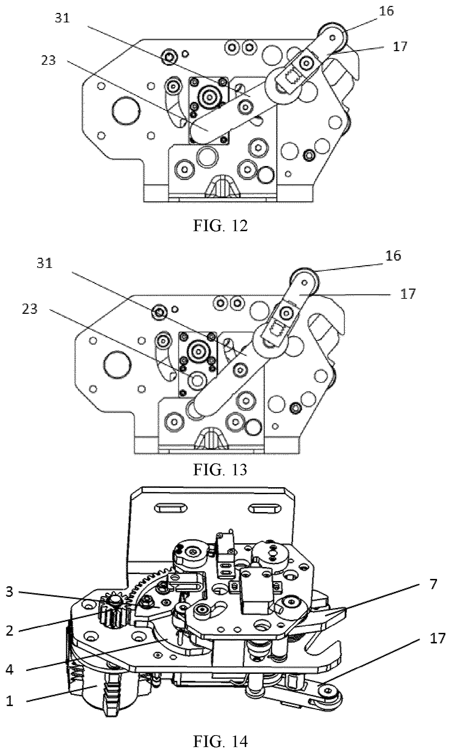

A process of disengagement and connection between the middle unlocking mechanism and a main lock is as follows: in a process of closing the vehicle door, the swing rod 17 is in an initial state (with reference to FIG. 11), the swing rod 17 does not come into contact with the lifting connecting member 23 of the middle unlocking mechanism, and the lifting connecting member 23 is in a retracted state (with reference to FIG. 8). When the vehicle door is closed, the vehicle door impacts the polyurethane molded bearing 16 to drive the swing rod 17 to rotate, the swing rod 17 is in a middle state (with reference to FIG. 12), the swing rod 17 rotates below the lifting connecting member 23, the lifting connecting member 23 drives the rotary connecting rod 5 to ascend upwards under an action of the swing rod 17 (with reference to FIG. 9), and the rotary connecting rod 5 is disengaged from the backing plate 4 (with reference to FIG. 10). In a rotation process of the backing plate 4, the rotary connecting rod 5 is driven to rotate clockwise and is disengaged from the unlocking plate 6. When the rotary connecting rod reaches a locking position, the swing rod 17 is in a final state (with reference to FIG. 13). In this case, the lifting connecting member 23 is in the retracted state (with reference to FIG. 8), and the rotary connecting rod 5 crosses a boss of the backing plate 4 to be reset by the rotary torsion spring 27, as shown in a figure of a locking position (with reference to FIG. 5). With reference to FIGS. 11-13, in the process, the rotary connecting rod 5 of the middle unlocking mechanism is connected to and disengaged from the main lock through power of the vehicle door, and the rotary connecting rod 5 of the middle unlocking mechanism is connected to the main lock anew.

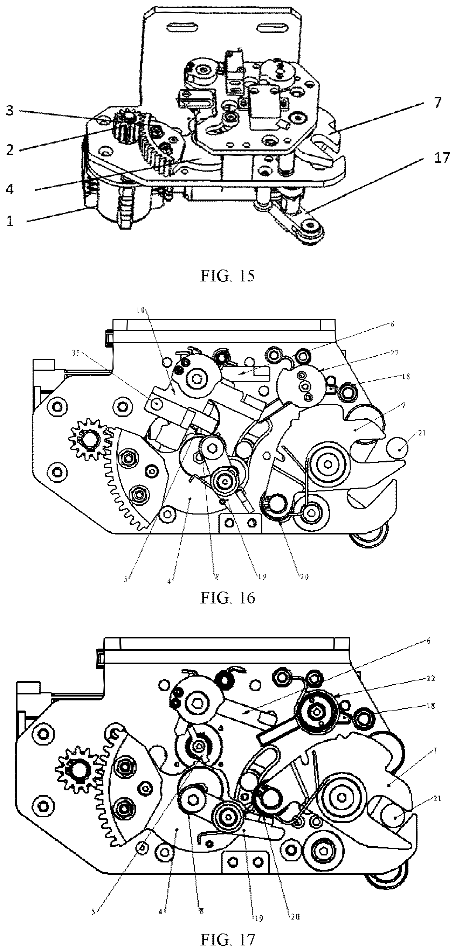

A process of manual unlocking is as follows: with reference to FIG. 16, the steel wire rope casting head 35 is manually pulled to drive the shift fork 10 to rotate clockwise, the shift fork 10 abuts against the transmission plate and drives the positioning block 18 to rotate, and the unlocking positioning block 18 is disengaged from the lock fork 7 to achieve manual unlocking. In the process of manual unlocking, the shift fork drives the rotary cam 11 to rotate, the rotary cam comes into contact with the microswitch 12, and the microswitch 12 transmits a signal of "manual unlocking" to a door controller.

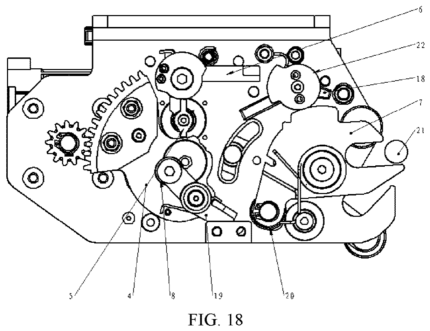

A process of electric unlocking is as follows: with reference to FIGS. 17-18, the electric motor 1 is reset to drive the pinion 2 to rotate counterclockwise, the pinion 2 drives the large gear 3 to rotate clockwise, the backing plate 4 in a rotating assembly of the large gear 3 drives the rotary connecting rod 5 in the electric middle unlocking mechanism to rotate, the rotary connecting rod 5 abuts against one end of the unlocking plate 6 and drives the unlocking plate 6 to rotate, the other end of the unlocking plate 6 abuts against the transmission plate to drive the positioning block 18 to rotate, and the unlocking positioning block 18 is disengaged from the lock fork 7 to achieve electric unlocking (with reference to FIG. 17). In the process of electric unlocking, the unlocking plate 6 drives the positioning block 18 to rotate clockwise, the positioning block 18 drives the cam 13 to rotate, the cam 13 impacts the limit switch 14, and the limit switch 14 feeds back an "unlocking" signal to the door controller. When the large gear 3 is reset, the rotary connecting rod 5 crosses the cam of the backing plate 4 to be reset by the torsion spring 27, so as to reach an initial state (with reference to FIG. 18).

## Claims

1. A miniature electric self-unlockable locking device, **characterized by** comprising: an electric lock and a door leaf shaft (21), wherein the electric lock comprises a mounting plate (15), and an electric motor (1), a pinion (2), a large gear (3), a backing plate (4), a shift gear (19), a shift fork (10), a lock fork (7), a positioning block (18), and a pull rod (9) that are mounted on the mounting plate (15), one end of the shift gear (19) abuts against the pull rod (9) when the shift gear and the backing plate (4) rotate synchronously, the other end of the shift gear shifts the lock fork (7) to move the door leaf shaft (21), the shift fork (10) pushes the positioning block (18) to rotate when rotating, and the positioning block (18) locks the lock fork (7); the miniature electric self-unlockable locking device further comprises a middle unlocking mechanism, a swing rod rotating mechanism, and an unlocking plate (6); the middle unlocking mechanism comprises a rotary connecting rod (5) and a lifting connecting member (23), the rotary connecting rod (5) is rotatably connected to the lifting connecting member (23), a rotary torsion spring (27) for resetting is arranged between the rotary connecting rod (5) and the lifting connecting member (23), and the lifting connecting member (23) is vertically and slidably connected to the mounting plate (15); the swing rod rotating mechanism comprises a swing rod (17) rotatably mounted on the mounting plate (15); the unlocking plate (6) is rotatably mounted below the pull rod (9); during unlocking, the rotary connecting rod (5) is compressed, one end of the rotary connecting rod is in abutting connection with the backing plate (4), the other end of the rotary connecting rod is in abutting connection with an end portion of the unlocking plate (6), and the other end of the unlocking plate (6) is connected to the positioning block (18); the rotary connecting rod (5) pushes one end of the unlocking plate (6) to rotate, and the other end of the unlocking plate pushes the positioning block (18) to rotate for unlocking; and in a process of locking a door leaf, the swing rod (17) is impacted by the door leaf to rotate to a position below the lifting connecting member (23), and the rotary connecting rod (5) extends out and is disengaged from the unlocking plate (6) and the backing plate (4) sequentially.

2. The miniature electric self-unlockable locking device according to claim 1, **characterized in that** the middle unlocking mechanism further comprises a deep groove ball bearing (26) and a plastic bushing (25), the rotary connecting rod (5) is rotatably connected to the lifting connecting member (23) through the deep groove ball bearing (26), and the lifting connecting member (23) is vertically and slidably connected to the mounting plate (15) through the plastic bushing (25).

3. The miniature electric self-unlockable locking device according to claim 2, **characterized in that** a compression spring (24) is further mounted between the lifting connecting member (23) and the mounting plate (15).

4. The miniature electric self-unlockable locking device according to any one of claims 1-3, **characterized in that** the swing rod rotating mechanism further comprises a polyurethane molded bearing (16), a connecting rod (33), a guide post (32) and a limiting post (34) that are mounted at an end portion of the swing rod (17), the swing rod (17) is located below the connecting rod (33), the swing rod and the connecting rod rotate coaxially, the connecting rod (33) is rotatably connected to the mounting plate (15), the polyurethane molded bearing (16) is mounted at one end of the swing rod (17), the other end of the swing rod is provided with a reset torsion spring (30) fixedly connected to the mounting plate (15), and the connecting rod (33) rotates on the mounting plate (15) through the limiting post (34) and a limiting groove.

5. The miniature electric self-unlockable locking device according to claim 4, **characterized in that** a spring pressing cover (29) is mounted on the reset torsion spring (30), and the spring pressing cover (29) is fixedly connected to the connecting rod (33).

6. The miniature electric self-unlockable locking device according to claim 4, **characterized in that** a shift rod (31) for shifting the lifting connecting member (23) to lift is fixed at an end portion of the connecting rod (33).

7. The miniature electric self-unlockable locking device according to claim 1, **characterized in that** a steel wire rope casting head (35) and a rotary cam (11) rotating synchronously with the shift fork (10) are arranged on the shift fork (10), and a microswitch (14) abutting against the rotary cam (11) is further arranged on the mounting plate (15).

8. The miniature electric self-unlockable locking device according to claim 1, **characterized in that** one end of the shift gear (19) abutting against the pull rod (9) is provided with a needle roller bearing (8), and one end of the lock fork (7) abutting against the shift gear (19) is provided with a roller (20).

9. The miniature electric self-unlockable locking device according to claim 1, **characterized in that** a cam (13) rotating coaxially is arranged above the positioning block (18), a limit switch (14) is arranged on the mounting plate (15), and the cam (13) controls opening and closing of the limit switch (14).
